# EUROPEAN PATENT APPLICATION

(11) **EP 4 723 004 A1**
(43) Date of publication of application: **08.04.2026**
(21) Application number: 24217926.5
(22) Date of filing: 05.12.2024
(51) Int. Cl.: G06Q 10/08, G06Q 10/0832, G06Q 10/087

(54) **A COMPUTER IMPLEMENTED METHOD**

(30) Priority: 07.10.2024 US 202463704208 P
(71) Applicant: AutoStore Technology AS, 5578 Nedre Vats (NO)
(72) Inventor: JOSHI, Parth, 5578 Nedre Vats (NO); FJELDHEIM, Ivar, 5578 Nedre Vats (NO)
(74) Representative: Kilburn & Strode LLP

(57) **Abstract**

The disclosure relates to a computer implemented method of monitoring an environmental condition in a container of an automated storage and retrieval system. The method comprises: receiving, from a transponder coupled to an environmental condition sensor in the container and via a reader in communication with the transponder, environmental condition data indicating the environmental condition; determining, by a controller, whether the environmental condition data meets a threshold criterion; and responsive to determining that the environmental condition data meets the threshold criterion, instructing, by the controller, the automated storage and retrieval system to transport the container to an inspection station.

## Description

### TECHNICAL FIELD

The disclosure relates to a computer implemented method. More particularly, it relates to a computer implemented method of monitoring an environmental condition in a container of an automated storage and retrieval system, a computer-readable medium, a computing system for controlling an automated storage and retrieval system, and a stackable container for an automated storage and retrieval system.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

Some goods may be stored in a warehouse under prescribed storage conditions. Goods may perish if the prescribed storage conditions were to fail. Such goods include produce or other foodstuffs. Similarly, pharmaceutical products and compositions, or any other medicinal products, can be stored in the warehouse. As such, it can be desirable to monitor the condition of goods stored in the warehouse and their storage environment.

The condition of goods can be monitored by a user in regularly scheduled checks. These user checks can be conducted under a consistent schedule, or after an expiry date of the goods has been reached. Alternatively, user checks can be scheduled in response to a detection of an anomalous environmental condition in the warehouse. However, user checks can be inefficient due to the manpower required. In addition, existing warehouse environmental condition sensors may not be susceptible to improvements in accurately measuring environmental conditions of the goods.

One or more aspects of the invention of the present application are set out in the claims.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Fig. 5 shows a method of monitoring an environmental condition in a container of a storage system;
Fig. 6 shows a method of reading environmental condition data;
Fig. 7A shows a stackable container comprising an environmental condition sensor;
Fig 7B shows an alternative view of the stackable container of Fig. 7A;
Fig. 7C shows a section of a sidewall of the stackable container of Fig. 7A; and
Fig. 8 shows a robotic container-handling vehicle and a stackable container according to Fig. 7A.

### DETAILED DESCRIPTION

In overview, the disclosure relates to a method of monitoring an environmental condition in a container of an automated storage and retrieval system, which is referred to as a storage system for short. The method includes receiving environmental condition data indicating an environmental condition in the storage container, i.e., in an internal storage space of the storage container. The method also includes determining whether the environmental condition data meets a threshold criterion. As described herein, the threshold criterion may take any suitable form and may indicate, for instance, whether a prescribed storage condition for goods in the container have failed, or whether goods in the container are likely to have or have begun to decay. Goods for which a prescribed storage condition in the container have failed, or goods which are likely to have or have begun to decay, are referred to herein as spoiled goods.

The threshold criterion may be met if an environmental condition in the storage container meets or surpasses a particular condition, such as by failing the prescribed storage condition for goods stored in the storage container. In response to determining that the environmental condition data meets the threshold criterion, the method may further include instructing the automated storage and retrieval system to transport the container to an inspection station at which the container can be inspected, emptied, washed, refilled, and/or replaced by a user.

Accordingly, the methods of the present disclosure provide in-container condition monitoring to inform whether goods stored in the container are likely to have spoiled. Such condition monitoring can effectively and specifically identify whether goods across the storage system are likely to have spoiled, particularly compared to out-of-container environmental condition sensor monitoring (e.g., by an environmental condition sensor disposed in the warehouse) which may not be capable of identifying variations in environmental conditions across storage spaces of the storage system. In the present method the environmental condition is monitored in the storage space of each container and therefore variations in environmental conditions can be monitored across the storage system. The present methods can therefore can more accurately identify whether the goods stored in the storage space have been exposed to undesirable environmental conditions which might lead to their spoiling. Undesirable environmental conditions comprise environmental conditions giving rise to environmental condition data which meets any of the threshold criteria described herein. Furthermore, monitoring the environmental condition in the storage space of each container can provide improvements in efficiency by reducing the total number of containers for inspection to only those with undesirable environmental conditions in their storage spaces instead of, for instance, all containers in a region of the storage system.

In the methods of the present disclosure, the environmental condition data is read by a reader in communication with a transponder coupled to an environmental condition sensor. As an example, the transponder may comprise a radio-frequency identification (RFID) tag and the reader may be an RFID reader for communicating with the RFID tag. Accordingly, the present method can leverage container identification mechanisms within the storage system for condition monitoring. For instance, each container may include an RFID tag storing an identification of the respective container which can be read by RFID readers on robotic container-handling vehicles when a container is lifted by a robotic container-handling vehicle.

In some implementations, the environmental condition is a past environmental condition. As such, the environmental condition sensor may be arranged to record past environmental condition(s) and store the past environmental condition(s) in any manner readable via the transponder. For instance, the transponder may be coupled to the environmental condition sensor via a read-write memory. Here, the environmental condition sensor may be arranged to write environmental condition data onto the read-write memory and the transponder may be arranged to read and/or transmit the environmental condition data from the read-write memory to the reader.

By recording and transmitting past environmental condition(s), the methods described herein can provide regular in-container detection of undesirable environmental conditions, even when the containers are stored within the automated storage and retrieval system. Accordingly, the presence of undesirable environmental conditions in the storage space of the containers can be identified, even if the undesirable environmental conditions do not persist to a time at which the environmental condition data is read.

As such, the methods described herein can identify whether the environmental condition in the container has ever met the threshold criterion prior to reading the environmental condition data from the transponder. This can provide increased flexibility in taking environmental condition data readings. Readings therefore need not be continuously taken when the containers are stored in a frame of the storage system and readers need not be positioned inside the frame accordingly. Instead, the readers can be positioned elsewhere such as on robotic container-handling vehicles or at ports of the storage system. These positionings can allow the environmental condition data to be seamlessly read during normal operation as containers are lifted and transported by the robotic container-handling vehicles and through the ports. For instance, during a digging operation many containers are lifted by robotic container-handling vehicles. Accordingly, methods according to the present disclosure can allow environmental conditions in each of the many containers to be monitored without increasing the number of operations carried out in the storage system.

### Automated storage and retrieval system overview

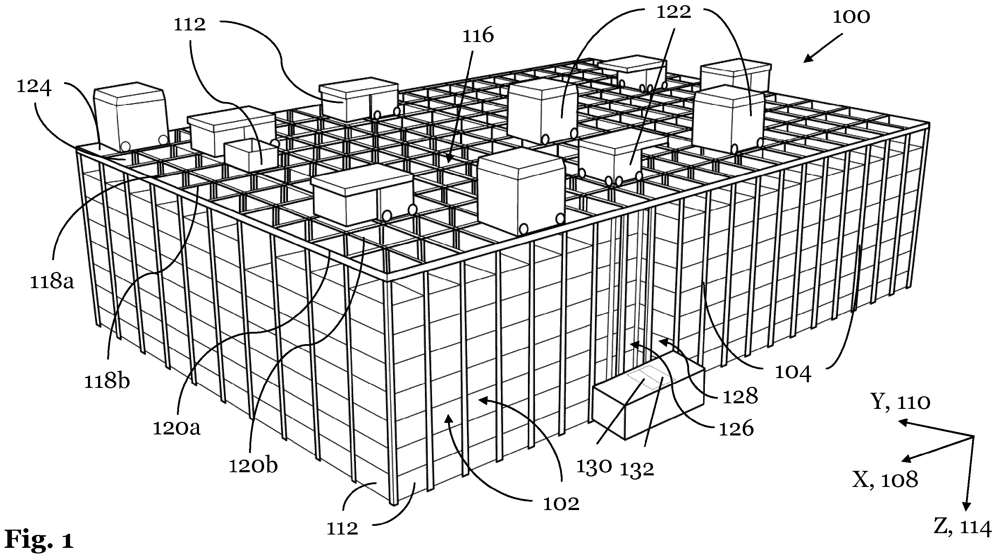

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off) and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

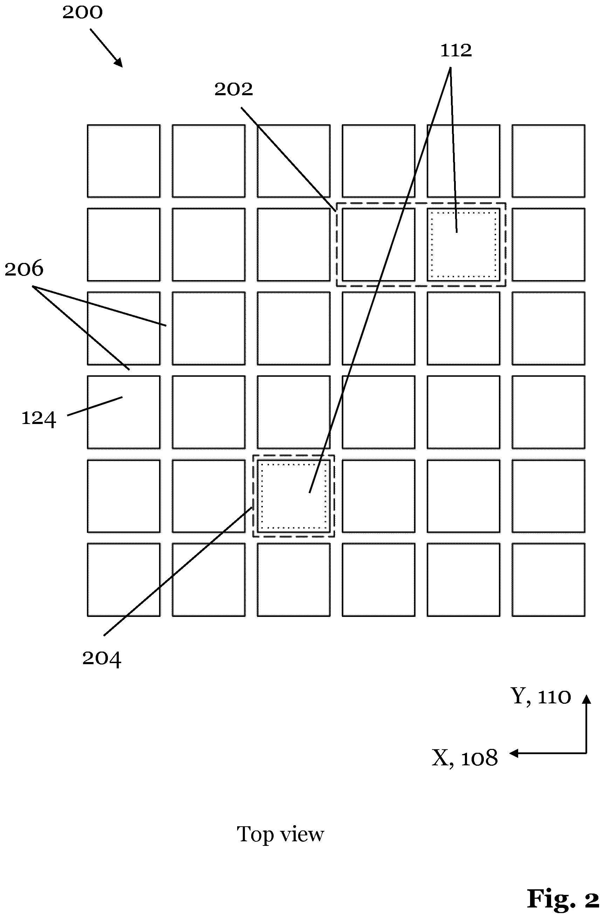

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

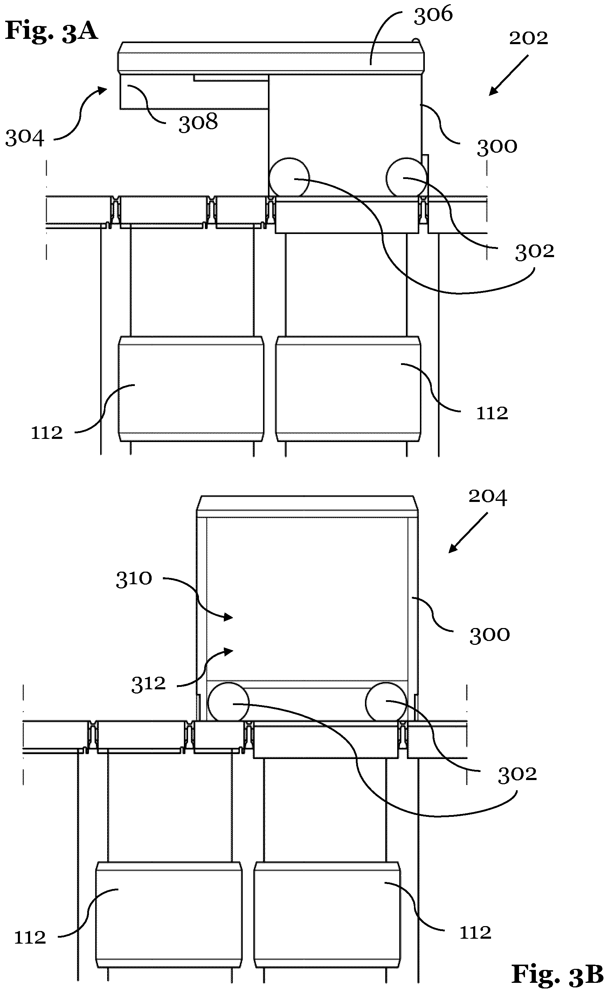

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

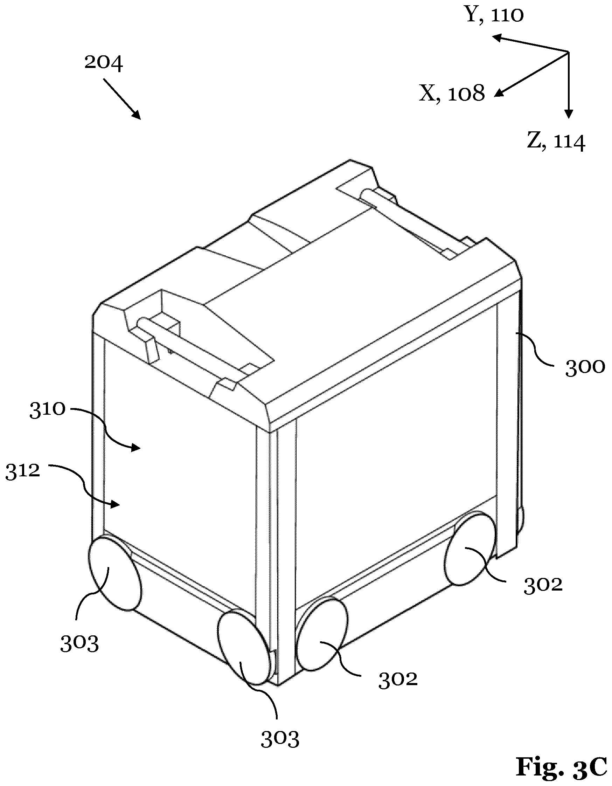

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

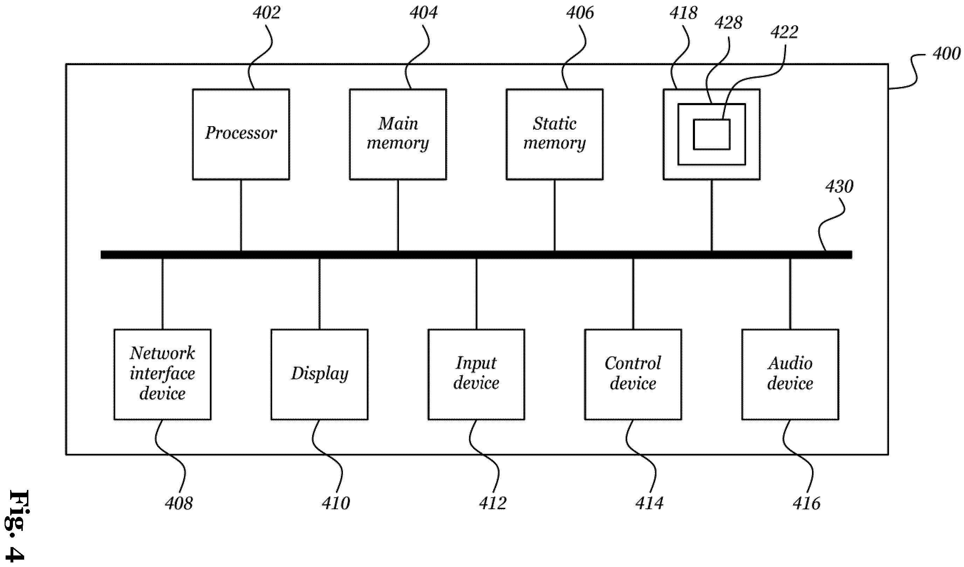

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which may be marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### Improved methods of monitoring environmental conditions

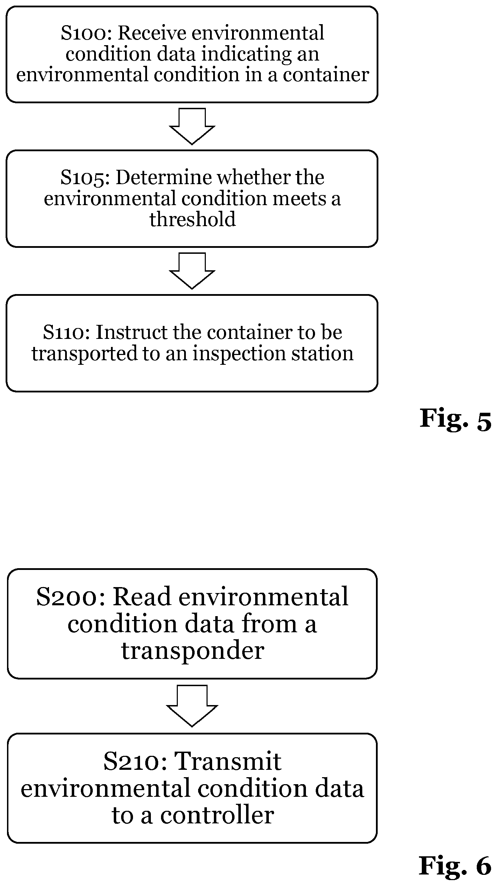

Fig. 5 depicts a flowchart of an example method of monitoring at least one environmental condition in a container of the automated storage and retrieval system. Monitoring an environmental condition in the container via the method shown in Fig. 5 can inform whether goods stored in the container are likely to have spoiled. Goods may be considered likely to have spoiled if their prescribed storage conditions have failed to be met. For instance, medicinal products (such as pharmaceutical products) may have strict requirements for storage temperature, illumination, humidity or atmospheric composition. Similarly, produce or other foodstuffs may also be stored under prescribed environmental conditions. As an example, frozen or refrigerated produce may be required to be stored at below a specific temperature. Accordingly, a failure of the storage space inside a container to meet (e.g., sustain) the required storage conditions for goods stored in the container can indicate that the goods are likely to have, or have, spoiled. Equally, goods stored in a container under undesirable environmental conditions may decay, in which case the environmental conditions may indicate the decay (e.g., by indicating the presence of a decay biproduct in the atmospheric composition in the bin).

The method shown in Fig. 5 is carried out on at least one processing system, such as the processing system 400 described with respect to Fig. 4. In implementations, the method shown in Fig. 5 is carried out by a controller of the automated storage and retrieval system. The controller may be the same controller as that which is otherwise arranged to control operation of the automated storage and retrieval system, or a module thereof.

The method begins at step S100 at which environmental condition data indicating an environmental condition in a container is received. The environmental condition in the container may include any suitable condition in the internal storage space of the container. For instance, the environmental condition may include, but is not limited to, any of a temperature in the container, a humidity in the container, a level of illumination in the container, and/or an atmospheric composition of the container. Accordingly, the environmental condition data may comprise any collection of parameters reflecting one or more of the environmental conditions. For instance, the environmental condition data may comprise any of a temperature inside the container, a humidity inside the container, an illumination level inside the container, and/or an amount of one or more atmospheric gasses or compounds inside the container. As described in more detail herein, the environmental condition data may include any of multiple timestamped measurements for any parameter, a peak or trough value for any parameter, and/or an indication of whether any parameter has met a threshold criterion (e.g., since a previous reading, or since a reset). The indication of whether any parameter has met a threshold criterion may be binary, i.e., by indicating whether the parameter has met a threshold criterion or not.

The environmental condition data received at step S100 may be received at the controller and originates from an environmental condition sensor in the container. The environmental condition data is transmitted to a reader from a transponder coupled to the environmental condition sensor. Accordingly, the transponder is associated with (e.g., affixed to or embedded in) the container. Similarly, the environmental condition sensor is disposed in the container to measure any suitable parameters reflecting one or more of the environmental conditions inside the container.

The environmental condition sensor may comprise one or more of: a temperature sensor, a humidity meter such as a hygrometer, a lux sensor such as an illuminance sensor, at least one gas sensor for detecting the presence or quantity of gasses and/or any other suitable atmospheric sensor. In some implementations, the environmental condition sensor may be modular and may include multiple modules for respectively measuring parameters reflecting an environmental condition.

The transponder may comprise any suitable means for receiving an interrogation signal and, in response to receiving the interrogation signal, transmitting data to the reader. The interrogation signal may be received from the reader. In some implementations, the transponder may be an RFID transponder in a RFID tag. In these implementations, the reader may comprise a cooperating RFID reader.

The transponder may additionally be arranged to identify the container to which it is affixed. For instance, the RFID tag containing the transponder may store an identification (such as an identification reference, number, or string) associated with the container. Accordingly, when read, the transponder may transmit the identification to the reader. The identification may uniquely identify either the container or the goods stored in the container. The identification may be associated with the container at an index at or accessible by the controller. Accordingly, when the identification is transmitted to the controller, the controller may identify the container by cross referencing the identification against the index. By using the same transponder both to transmit an identification of the container and to transmit environmental condition data, methods of the present disclosure can improve utilisation of space in the storage system and can be easily carried out at storage systems by leveraging container identification mechanisms of the storage system to monitor the environmental conditions. That is, additional readers for environmental condition monitoring need not be installed in the storage system on top of those readers for receiving container identification information.

In some implementations, the environmental condition data may indicate a past environmental condition in the container. Past environmental conditions are any historic environmental conditions, i.e., any environmental condition recorded or experienced by the environmental condition sensor prior to transmission by the transponder. In other words, when the environmental condition data indicates a past environmental condition, the environmental condition data does not solely include environmental conditions measured in the container at the time of transmission. In these implementations, the environmental condition data indicating the past environmental condition is recorded by the environmental condition sensor and may be stored at a location accessible by the transponder. Accordingly, at transmission, the transponder can access the environmental condition data and transmit the recording of the past environmental condition to the reader.

The transponder may therefore be coupled to an environmental condition sensor via a read-write memory. For instance, the read-write memory may be located at the environmental condition sensor or the transponder. Accordingly, the transponder maybe an RFID transponder in an RFID tag containing a read-write memory. In these examples, the environmental condition sensor can write environmental condition data onto the read-write memory. Similarly, the transponder can read the environmental condition data from the read-write memory, and relate the environmental condition data to the reader. The read-write memory may take any suitable form, such as any form of memory otherwise described herein. The read-write memory may be a reserve memory or a user memory in an RFID tag. When the transponder is arranged to identify the container to which it is affixed, the read-write memory may additionally include the identification, or the identification may otherwise be provided in a tag identifier memory of the RFID tag.

When stored in the read-write memory, the environmental condition data indicating a past environmental condition may be timestamped. Accordingly, each entry in the environmental condition data may indicate the time at which the entry was recorded by the environmental condition sensor. In some examples, to save storage space in the read-write memory, the read-write memory may store peak and trough values (including local peak and trough values) for any parameter in the environmental condition data. Similarly, in some examples, to save storage space in the read-write memory, the read-write memory may store environmental condition data which meets a threshold criterion, such as any of the threshold criterion described herein, or an indication (e.g., a binary indication) that the environmental condition data meets the threshold criterion.

As an alternative to a computational memory, the read-write memory described here may be provided by a deformable element in, for instance, the transponder and/or the environmental condition sensor. Here, the deformable element may deform in response to the detection of a set environmental condition, such as a temperature above or below a set temperature, a humidity above or below a set humidity, or any set parameters of other environmental conditions described herein. The transponder may therefore be arranged to send a signal indicating whether the deformable element has deformed to the reader. Accordingly, by tuning or selecting the deformable element to deform when the environmental condition data meets the threshold criterion, a past environmental condition of whether the threshold criterion has been met may be recorded by the environmental condition sensor. Accordingly, in these examples, the transponder may transmit data indicating the past environmental condition by transmitting a binary indication of whether the threshold criterion has been met.

The method continues to step S105 which involves determining whether the environmental condition meets a threshold criterion. This determination may be made by the controller and is based on the environmental condition data received in step S100. Accordingly, the threshold criterion may be stored at the controller. In particular, the threshold criteria may be manually or automatically input at the controller. The threshold criterion may take any suitable form, and may indicate whether the goods stored in the container have, or are likely to have, spoiled. For instance, the goods may be considered to have, or to likely to have been, spoiled if the environmental condition data suggests that a prescribed storage condition in the container have failed, or goods are likely to have, or have, begun to decay. Accordingly, the threshold criterion may be met if the environmental condition data indicates that a prescribed storage condition in the container has failed, or goods in the storage container are likely to have begun to decay.

The prescribed storage condition may be stored at the controller. Accordingly, the determination of whether the environmental condition data meets a threshold criterion may be carried out at the controller.

In certain examples, the prescribed storage condition is considered failed if the prescribed storage condition has not been met while the container is stored in the storage system. For instance, the prescribed storage condition may be that the goods be kept under a specific temperature (e.g., under 0°C for frozen goods) and that the goods are not elevated above the specific temperature for greater than a specific duration. In this specific example, the prescribed storage condition would be considered failed if the goods are (i.e., if the internal storage space of the container is) elevated above the specific temperature for a specific duration.

The environmental condition data may indicate that goods in the storage container are likely to have begun to decay if the environmental condition data indicates the presence of, or greater than a threshold amount of decay biproducts in the atmospheric composition inside the container. With time, produce and foodstuffs begin to decay and spoil by, for instance, mould growth, decomposition or rotting. Such decay releases biproducts into the surrounding environment of the storage container. The biproducts may include propionic acid, lactic acid, methane, hydrogen sulphide and ammonia. If the environmental condition data suggests an increase in any decay biproducts the controller may determine that goods in the storage container are likely to have begun to decay.

Similarly, the environmental condition data may indicate that goods in the storage container are likely to have begun to decay if the environmental condition data indicates an increase in, or greater than a threshold amount of humidity inside the container. For instance, the increase in humidity may be attributed to spoiled produce. Equally, for certain goods, the environmental condition data may indicate that goods in the storage container are likely to have begun to decay if the environmental condition data indicates a decrease in, or less than a threshold amount of humidity inside the container.

It should be appreciated that the conditions under which goods may have been, or likely to have been, spoiled described herein are exemplary. Other conditions may additionally or alternatively be considered. These other conditions depend in particular on the nature of the stored goods, their prescribed storage conditions and the consequence of their spoiling. Put generally, the threshold criterion for the purposes of the determination in step S105 may comprise a threshold criterion determined based on the goods stored in the container.

As an example, the threshold criterion may comprise an indication that the environmental condition has surpassed a threshold value (also labelled a first threshold value). This threshold criterion is considered to be met if the environmental condition data indicates that the environmental condition to which the threshold relates surpasses the threshold value. The criterion of this example is particularly suitable for goods which cannot be maintained at an environmental condition higher than the threshold value.

As used herein, a threshold value may be an upper limit, such as an upper temperature limit, an upper humidity limit, an upper illumination level limit, or an upper limit to a particular component in an atmospheric composition. Alternatively, the threshold value may be a lower limit, such as a lower temperature limit, a lower humidity limit, a lower illumination level limit, or a lower limit to a particular component in an atmospheric composition. Environmental condition data is considered to surpass an upper limit if the corresponding environmental condition value is higher than the upper limit. Conversely, environmental condition data is considered to surpass a lower limit if the corresponding environmental condition value is lower than the lower limit.

As another example, the threshold criterion may comprise an indication that the environmental condition has surpassed a threshold value (also labelled as a second threshold value) for a threshold duration. The second threshold value may be the same as or different from, the first threshold value. This threshold criterion is considered to be met if the environmental condition data indicates that the environmental condition to which the threshold relates surpasses the threshold value for at least the threshold duration. For instance, the environmental condition data may include a series of sequential time stamped entries spanning at least the threshold duration in which an environmental condition exceeds the threshold value. Alternatively, the environmental condition data may include a single entry indicating that an environmental condition surpassed the threshold value for the threshold duration. The criterion of this example is particularly suitable for goods which can be held at an environmental condition higher than the threshold value, but only for a limited amount of time.

As yet another example, the threshold criterion may comprise a repeat reading of the environmental condition surpassing a threshold value (also labelled as a third threshold value). The third threshold value may be the same as or different from, the first and/or second threshold values. This threshold criterion is considered to be met if each of multiple times the environmental condition data is read (e.g., by a reader), the environmental condition to which the threshold relates surpasses the threshold value. The criterion of this example is particularly suitable for any implementations where the environmental condition data does not include time stamps, where the environmental condition data does not necessarily include a past environmental condition and is therefore only read when interrogated by a reader, and/or where the environmental condition data is read on a regular schedule.

As yet another example, the threshold criterion may comprise an indication that the environmental condition cycled between an upper value and a lower value at least a threshold number of times. Here, a cycle between an upper value and a lower value comprises taking a reading of an environmental condition parameter which exceeds the upper value and taking a successive reading of an environmental condition parameter lower than the lower value. The criterion of this example is particularly suitable for goods which are degraded under exposure to environmental condition cycles (such as cycles between higher and lower temperatures). For instance, goods may be strained during expansion at higher temperatures, and contraction at lower temperatures. Here, each expansion-contraction cycle may strain the goods such that after the threshold number of cycles, the goods risk spoiling, or otherwise being damaged.

In some examples, goods stored in the container may be perishable goods, such as produce or other foodstuffs. Accordingly, the container may hold perishable goods when the container is stored in the automated storage and retrieval system. In these examples, the threshold criterion may comprise at least one of the presence of a decay biproduct of the perishable goods, and/or an indication that the environmental condition previously failed a storage requirement for the perishable goods, as otherwise described herein.

The method continues to step S110 in which, in response to determining that the environmental condition data meets the threshold criterion in step S105, the automated storage and retrieval system is instructed by the controller to transport the container to an inspection station. The instruction and transport of the container is carried out by the robotic container handling vehicles, as otherwise described herein. In response to the instructions in step S110, the container is transported to the inspection station.

The inspection station may comprise a port, such as any of the picking or packing ports described herein. At the port, a user may access the container for inspection. Here, the user may inspect the contents of the container and determine that the goods stored therein require replacement, at which point the user may reload or otherwise replace the goods in the container and then return the container to the grid. Alternatively, the user may remove the container from the storage system. For instance, the user may inspect the container and determine that the container requires washing, at which point the user may remove the container from the storage system and then wash the container.

Equally, the inspection station may be at a separate location to the port. For instance, the inspection station may be a washing station for washing the components of the storage system, such as the containers. As such, the containers may be washed without being removed from the storage system altogether and without increasing traffic to the port.

### Improved methods of reading environmental condition data

Fig. 6 depicts a flowchart of a method of reading environmental condition data from a transponder in a container of an automated storage and retrieval system. Accordingly, the method of Fig. 6 may involve collecting the environmental condition data which is received at a controller at step S100 of the method of Fig. 5. The method shown in Fig. 6 is carried out by a reader in communication with the transponder, as otherwise described herein. The reader may be any suitable type of reader for cooperating with the transponder. For instance, the transponder may be provided in an RFID tag and the reader may be an RFID reader. The reader may be disposed at any suitable position in the storage system. For instance (and without limitation), the reader may be installed on a robotic container-handling vehicle of the storage system or the reader may be installed at a port or a port column of the automated storage and retrieval system. On the other hand, the readers described herein may additionally or alternatively be positioned inside the frame or at any other suitable location in the storage system.

The method of Fig. 6 starts at step S200 at which environmental condition data is read from a transponder in an automated storage and retrieval system. Reading environmental condition data from the transponder may comprise sending an interrogation signal from the reader to the transponder and, receiving, from the transponder, a response to the interrogation signal comprising the environmental condition data. The response to the interrogation signal may additionally include an identification of the container associated with the transponder.

The reader may be installed on a robotic container-handling vehicle. Accordingly, the reader may read the environmental condition data from the transponder when the robotic container-handling vehicle engages (e.g., comes proximal to, contacts, grips, and/or lifts) the container. When installed on the robotic container-handling vehicle, the reader may be powered by and signally connected to the onboard control and communications systems via cables. The cables may be arranged in a lifting band of the robotic container-handling vehicle.

Here, the reader may be disposed on a lifting frame of the robotic container-handling vehicle. In these examples, the reader can communicate with a transponder in a container while the container is disposed in a storage column, without needing to lift the container. The reader can therefore quickly and easily communicate with the transponder and read the environmental condition data therefrom.

Alternatively, the reader may be arranged at (e.g., inside or proximal to) a storage space of the vehicle, i.e., in a central cavity of an internal cavity type robot, inside a body of the vehicle or at a storage space arranged on the side of the body, e.g., for cantilever type robots. The reader may therefore be arranged at a position inside the cavity or body of the vehicle, e.g., in or on the side walls of the vehicle or in a top cover of the vehicle, preferably close to where the transponder in the storage container is located when the storage container is lifted to the storage space of the vehicle.

Installing the reader in a robot can allow the environmental condition data to be seamlessly and efficiently read during operation of the automated storage and retrieval system, without additionally routing the storage container about the storage system. In particular, during a digging operation, robots of the storage system may engage many containers during sequentially lifting and repositioning of containers stored above the target bin. Accordingly, during these digging operations, each of the many containers are engaged and environmental condition data relating thereto can be read.

In alternative embodiments, the reader may be installed at a port of the storage system. For instance, the reader may be arranged in the housing of the port, at a channel of the port through which containers can pass. Accordingly, as the containers pass through the channel, the reader may read the environmental condition data from the transponder when the robotic container-handling vehicle is transported to and through the port. Similarly, the reader may be arranged at a port column, e.g., within a frame element the storage system at the port column. Accordingly, the reader may read the environmental condition data from the transponder when the robotic container-handling vehicle is transported to the port through the port column. Installing the reader in the port or a port column can allow the environmental condition data to be seamlessly and efficiently read during operation of the automated storage and retrieval system during picking and packing, without additionally routing the storage container about the storage system.

The method of Fig. 6 may continue to step S210 at which the environmental condition data is transmitted from the reader. The transmitted environmental condition data at step S210 may be received at the controller, as in step S100 of the method of Fig. 5.

The reader may therefore be in communication with the controller of the storage system. As such, the reader may also be able to transmit data (such as the environmental condition data) to the controller and optionally to receive instructions from the controller. Typically, the reader transmits the data via onboard control and communications systems of the vehicle, also referred to as the vehicle control system, which relays data to the controller. The controller may thus process the information from the transponder, as described with respect to Fig. 5. In some examples, the reader is modular, with a reading module for communicating with the transponder, and a relay module for communicating the data to the controller and/or the vehicle control system.

### Containers and robotic container-handling vehicles for use in improved methods

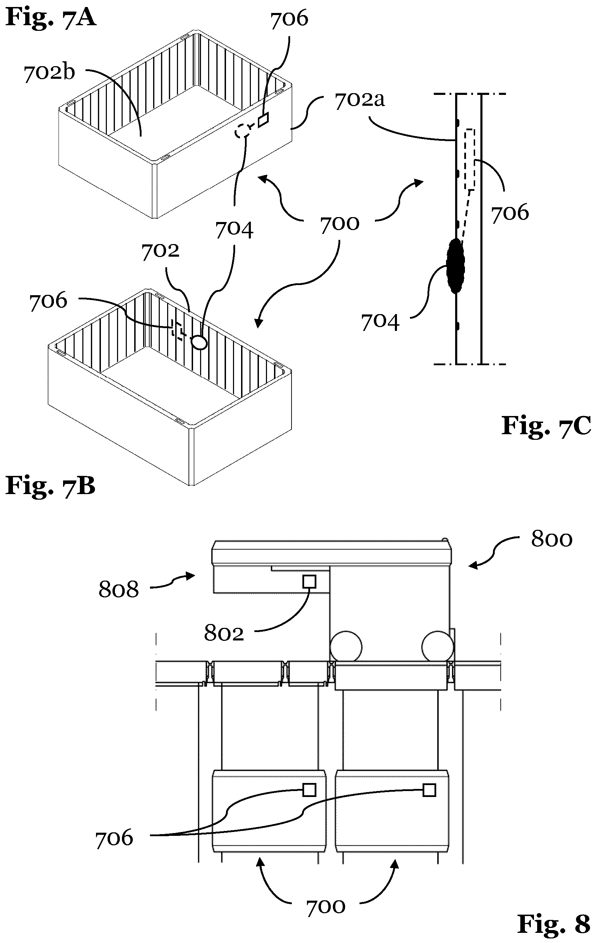

Referring to Figs. 7A and 7B, a stackable container 700 is depicted. The stackable container may be provided in any of the automated storage and retrieval systems described herein. The stackable container 700 is suitable for use in the methods described herein, particularly the methods of reading and monitoring at least one environmental condition in a container 700, also described with respect to Figs. 5 and 6. Similarly, Fig. 7C shows an enlarged cross section of a sidewall 702a of the stackable container 700. As shown, the stackable container comprises an environmental condition sensor 704 and a transponder 706 coupled to the environmental condition sensor. Unless stated to the contrary, features of the stackable container 700 may be as described with respect to Figs. 5 and 6.

The environmental condition sensor 704 is arranged to detect and record an environmental condition inside the container. Accordingly, the environmental condition sensor 704 may be disposed on the inside of a sidewall 702a, or of the base 702b, of the stackable container 700. The environmental condition sensor 704 may be in communication with the internal storage space of the container to thereby detect environmental condition data therein. As otherwise described herein, the environmental condition sensor is arranged to measure any suitable parameters reflecting one or more of the environmental conditions inside the container. For instance, the environmental condition sensor may comprise a temperature sensor, a humidity meter such as a hygrometer, a lux sensor such as an illuminance sensor, at least one gas sensor for detecting the presence or quantity of gasses and/or any other suitable atmospheric sensor.

The transponder 706 is coupled to the environmental condition sensor 704 and is arranged to wirelessly transmit environmental condition data indicating the environmental condition recorded by the environmental condition sensor. For instance, the transponder may be arranged to wirelessly transmit environmental condition data to a cooperating receiver. The positioning of the transponder may be paired with a positioning of the cooperating reader. Accordingly, the transponder is positioned in the storage container such that the reader can communicate with the transponder to read data therefrom. In other words, during reading, the reader and the transponder are preferably located relatively close to each other, i.e., at a given position relative to each other, such that the reader can easily read the transponder.

The transponder 706 may be disposed inside the body of the storage container 700. For instance, the transponder may be disposed inside the sidewall 702a, as shown in Fig. 7C. In alternative implementations the transponder may be disposed on the inside or outside surface of the sidewall, in which case the transponder may be easily installable onto existing storage containers and/or may be presentable to a reader without obstruction by the sidewall material.

As otherwise described herein, the transponder 706 may be arranged to wirelessly transmit a past environmental condition previously detected by the environmental condition sensor. Here, the past environmental condition may comprise an indication of whether the environmental condition data meets a threshold criterion, such as any of the threshold criterion described herein. As similarly otherwise described herein, the transponder may be coupled to the environmental condition sensor via a read-write memory.

Referring to Fig. 8, a robotic container-handling vehicle 800 with a reader 804 disposed thereon is shown. The reader is installed on a gripping device 808 of a lifting frame of the robot. Accordingly, the reader 804 may be disposed to read the environmental condition data from the transponder 706 when the robotic container-handling vehicle engages (e.g., comes proximal to, contacts and/or lifts) the container 700. The container 700 is also shown, beneath the gripping device 808. When the gripping device 808 is lowered, the reader can be brought into proximity to and communication with the transponder 706. The robotic container-handling vehicle 800 shown in Fig. 8 is a cantilever type robot. Since the reader 802 is disposed on the gripping device, the reader 802 is said to be at a storage space of the vehicle.

In any of the examples described herein, multiple containers 700 (e.g., all the containers) in the storage system may include a transponder 706. Here, each transponder 706 is preferably located at the same relative position on each container, such that the same reader can easily read each transponder. Accordingly, the reader may be disposed in the storage system relatively close to the transponder such that the reader can easily read the transponder.

In any of the examples described herein, the reader 802 and transponder 706 may be based on a powered (i.e., active) reader and a passive transponder, however a powered reader and powered transponder may also be employed (e.g., Bluetooth and some types of Near Field Communication (NFC)). Examples of different communication means where a passive transponder and a powered reader are employed, which can be the reader and transponder described herein, include electromagnetic field systems including: Radio Frequency Identification (RFID) and Near Field Communication (NFC) reader/writer.

It will be appreciated that the different electromagnet field systems have the following properties. Radio-frequency identification (RFID) uses electromagnetic fields to automatically identify and track transponders attached to objects. The transponders contain electronically stored information. Passive transponders collect energy from a nearby RFID reader's interrogating radio waves. Active transponders have a local power source (such as battery) and may operate hundreds of meters from the RFID reader. Unlike a barcode, the transponder need not be within the line of sight of the reader, so it may be embedded in the tracked object. RFID is one method for Automatic Identification and Data Capture (AIDC). In aspects, metallic plates or other means to shield interfering electromagnetic waves from neighbouring storage containers may be arranged around a transponder to avoid disturbances from these. Near Field Communication (NFC) reader/writer enables NFC-enabled devices to read information stored on inexpensive NFC transponders embedded in transponders or smart posters. NFC standards cover communications protocols and data exchange formats and are based on existing radio-frequency identification (RFID) standards including ISO/IEC 14443 and FeliCa. The standards include ISO/IEC 18092 and those defined by the NFC Forum. NFC can be rooted in radio-frequency identification technology (known as RFID) which allows compatible hardware to both supply power to and communicate with an otherwise unpowered and passive electronic transponder using radio waves.

### Penultimate comments

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

The present disclosure also includes the following clauses:
Clause 1. A computer implemented method of monitoring an environmental condition in a container of an automated storage and retrieval system, the method comprising:
   receiving, from a transponder coupled to an environmental condition sensor in the container and via a reader in communication with the transponder, environmental condition data indicating the environmental condition;
   determining, by a controller, whether the environmental condition data meets a threshold criterion; and
   responsive to determining that the environmental condition data meets the threshold criterion, instructing, by the controller, the automated storage and retrieval system to transport the container to an inspection station.
Clause 2. The computer implemented method of clause 1, wherein the reader is installed on a robotic container-handling vehicle, and wherein the method further comprises: reading the environmental condition data from the transponder when the robotic container-handling vehicle engages the container.
Clause 3. The computer implemented method of clause 1, wherein the reader is installed at a port or a port column of the automated storage and retrieval system, and wherein the method further comprises: reading the environmental condition data from the transponder when the container is transported to the port.
Clause 4. The computer implemented method of any previous clause, wherein the transponder comprises an RFID tag and the reader comprises an RFID reader.
Clause 5. The computer implemented method of any previous clause, wherein the transponder is coupled to the environmental condition sensor via a read-write memory.
Clause 6. The computer implemented method of any previous clause, wherein the environmental condition comprises one or more of: a temperature, a humidity, a level of illumination, or an atmospheric composition.
Clause 7. The computer implemented method of any previous clause, wherein the environmental condition is a past environmental condition, and wherein the past environmental condition is recorded by the environmental condition sensor.
Clause 8. The computer implemented method of any previous clause, wherein the threshold criterion comprises an indication that the environmental condition surpassed a first threshold value.
Clause 9. The computer implemented method of any previous clause, wherein the threshold criterion comprises an indication that the environmental condition surpassed a second threshold value for a threshold duration.
Clause 10. The computer implemented method of any previous clause, wherein the threshold criterion comprises a repeat reading of the environmental condition surpassing a third threshold value.
Clause 11. The computer implemented method of any previous clause, wherein the threshold criterion comprises an indication that the environmental condition cycled between an upper value and a lower value at least a threshold number of times.
Clause 12. The computer implemented method of any previous clause wherein the container holds perishable goods when the container is stored in the automated storage and retrieval system.
Clause 13. The computer implemented method of clause 12, wherein the threshold criterion comprises: the presence of a decay biproduct of the perishable goods, and/or an indication that the environmental condition previously failed a storage requirement for the perishable goods.
Clause 14. A computer-readable medium comprising instructions which, when executed by a processor of a computing system, cause the computing system to perform the method of any of clauses 1-13.
Clause 15. A computing system for controlling an automated storage and retrieval system, the computing system comprising:
   one or more processors; and
   a memory in communication with the one or more processors, the memory storing instructions that when executed by the one or more processors cause the computing system to perform the method of any of clauses 1-13.
Clause 16. A stackable container for an automated storage and retrieval system, the stackable container comprising:
   an environmental condition sensor arranged to detect and record an environmental condition inside the container,
   a transponder coupled to the environmental condition sensor and arranged to wirelessly transmit environmental condition data indicating the environmental condition recorded by the environmental condition sensor.
Clause 17. The stackable container of clause 16, wherein the transponder is arranged to wirelessly transmit a past environmental condition previously detected by the environmental condition sensor.
Clause 18. The stackable container of clause 17, wherein the past environmental condition comprises an indication of whether the environmental condition data meets a threshold criterion.
Clause 19. The stackable container of any of clauses 16-18, wherein the transponder is coupled to the environmental condition sensor via a read-write memory.
Clause 20. An automated storage and retrieval system comprising:
   the container of any of clauses 16-19, and
   a robotic container-handling vehicle arranged to read the environmental condition data from the transponder upon engaging the container.

## Claims

1. A computer implemented method of monitoring an environmental condition in a container of an automated storage and retrieval system, the method comprising:
receiving, from a transponder coupled to an environmental condition sensor in the container and via a reader in communication with the transponder, environmental condition data indicating the environmental condition;
determining, by a controller, whether the environmental condition data meets a threshold criterion; and
responsive to determining that the environmental condition data meets the threshold criterion, instructing, by the controller, the automated storage and retrieval system to transport the container to an inspection station.

2. The computer implemented method of claim 1, wherein either:
the reader is installed on a robotic container-handling vehicle, and wherein the method further comprises: reading the environmental condition data from the transponder when the robotic container-handling vehicle engages the container; and/or
the reader is installed at a port or a port column of the automated storage and retrieval system, and wherein the method further comprises: reading the environmental condition data from the transponder when the container is transported to the port.

3. The computer implemented method of claim 1 or claim 2, wherein the transponder comprises an RFID tag and the reader comprises an RFID reader.

4. The computer implemented method of any preceding claim, wherein the transponder is coupled to the environmental condition sensor via a read-write memory.

5. The computer implemented method of any preceding claim, wherein the environmental condition comprises one or more of: a temperature, a humidity, a level of illumination, or an atmospheric composition.

6. The computer implemented method of any preceding claim, wherein the environmental condition is a past environmental condition, and wherein the past environmental condition is recorded by the environmental condition sensor.

7. The computer implemented method of any preceding claim, wherein the threshold criterion comprises an indication that the environmental condition surpassed a first threshold value.

8. The computer implemented method of any preceding claim, wherein the threshold criterion comprises an indication that the environmental condition surpassed a second threshold value for a threshold duration.

9. The computer implemented method of any preceding claim, wherein the threshold criterion comprises a repeat reading of the environmental condition surpassing a third threshold value.

10. The computer implemented method of any preceding claim, wherein the threshold criterion comprises an indication that the environmental condition cycled between an upper value and a lower value at least a threshold number of times.

11. The computer implemented method of any preceding claim, wherein the container holds perishable goods when the container is stored in the automated storage and retrieval system.

12. The computer implemented method of claim 11, wherein the threshold criterion comprises: the presence of a decay biproduct of the perishable goods, and/or an indication that the environmental condition previously failed a storage requirement for the perishable goods.

13. A computer-readable medium comprising instructions which, when executed by a processor of a computing system, cause the computing system to perform the method of any of claims 1-12.

14. A computing system for controlling an automated storage and retrieval system, the computing system comprising:
one or more processors; and
a memory in communication with the one or more processors, the memory storing instructions that when executed by the one or more processors cause the computing system to perform the method of any of claims 1-12.

15. A stackable container for an automated storage and retrieval system, the stackable container comprising:
an environmental condition sensor arranged to detect and record an environmental condition inside the container,
a transponder coupled to the environmental condition sensor and arranged to wirelessly transmit environmental condition data indicating the environmental condition recorded by the environmental condition sensor.

## Amended claims

### Amended claims in accordance with Rule 137(2) EPC.

1. A computer implemented method of monitoring an environmental condition in a container of an automated storage and retrieval system, the method comprising:
receiving, from a transponder coupled to an environmental condition sensor in the container and via a reader in communication with the transponder, environmental condition data indicating the environmental condition;
determining, by a controller, whether the environmental condition data meets a threshold criterion; and
responsive to determining that the environmental condition data meets the threshold criterion, instructing, by the controller, the automated storage and retrieval system to transport the container to an inspection station.

2. The computer implemented method of claim 1, wherein either:
the reader is installed on a robotic container-handling vehicle, and wherein the method further comprises: reading the environmental condition data from the transponder when the robotic container-handling vehicle engages the container; and/or
the reader is installed at a port or a port column of the automated storage and retrieval system, and wherein the method further comprises: reading the environmental condition data from the transponder when the container is transported to the port.

3. The computer implemented method of claim 1 or claim 2, wherein the transponder comprises an RFID tag and the reader comprises an RFID reader.

4. The computer implemented method of any preceding claim, wherein the transponder is coupled to the environmental condition sensor via a read-write memory.

5. The computer implemented method of any preceding claim, wherein the environmental condition comprises one or more of: a temperature, a humidity, a level of illumination, or an atmospheric composition.

6. The computer implemented method of any preceding claim, wherein the environmental condition is a past environmental condition, and wherein the past environmental condition is recorded by the environmental condition sensor.

7. The computer implemented method of any preceding claim, wherein the threshold criterion comprises an indication that the environmental condition surpassed a first threshold value.

8. The computer implemented method of any preceding claim, wherein the threshold criterion comprises an indication that the environmental condition surpassed a second threshold value for a threshold duration.

9. The computer implemented method of any preceding claim, wherein the threshold criterion comprises a repeat reading of the environmental condition surpassing a third threshold value.

10. The computer implemented method of any preceding claim, wherein the threshold criterion comprises an indication that the environmental condition cycled between an upper value and a lower value at least a threshold number of times.

11. The computer implemented method of any preceding claim, wherein the container holds perishable goods when the container is stored in the automated storage and retrieval system.

12. The computer implemented method of claim 11, wherein the threshold criterion comprises: the presence of a decay biproduct of the perishable goods, and/or an indication that the environmental condition previously failed a storage requirement for the perishable goods.

13. A computer-readable medium comprising instructions which, when executed by a processor of a computing system, cause the computing system to perform the method of any of claims 1-12.

14. A computing system for controlling an automated storage and retrieval system, the computing system comprising:
one or more processors; and
a memory in communication with the one or more processors, the memory storing instructions that when executed by the one or more processors cause the computing system to perform the method of any of claims 1-12.
